# EUROPEAN PATENT APPLICATION

(11) **EP 4 808 045 A1**
(43) Date of publication of application: **16.09.2026**
(21) Application number: 26162938.0
(22) Date of filing: 06.03.2026
(51) Int. Cl.: H04L 9/40, G06F 21/44, H04L 9/32

(54) **TAMPER RESISTANT SECRETS DELIVERY FOR CLOUD IDENTITY BOOTSTRAPPING**

(30) Priority: 12.03.2025 US 202519078040
(71) Applicant: Microsoft Technology Licensing, LLC, Redmond, WA 98052-6399 (US)
(72) Inventor: Henk, Christopher Austin, Redmond, WA, 98056 (US); Gurunath, Rohit, Redmond, WA, 98056 (US); Gabriel, Logan Sinclair, Redmond, WA, 98056 (US); Russinovich, Mark Eugene, Redmond, WA, 98056 (US); Adhikarla, Shrikant, Redmond, WA, 98056 (US); Hernan, Shawn Valentine, Redmond, WA, 98056 (US); Miller, Matthew Ryan, Redmond, WA, 98056 (US)
(74) Representative: Grünecker Patent- und Rechtsanwälte PartG mbB

(57) **Abstract**

Methods, apparatuses, and products for trust establishment for cloud computing environments include establishing an initial trust between an intermediary component of a computing environment and a host of the computing environment; intercepting, by the intermediary, a request from software executing within the computing environment to an identity authentication endpoint; determining, by the intermediary, whether to authenticate the software; in response to determining to authenticate the software, applying, by the intermediary, a digital signature to the request; and forwarding the request, with the digital signature, to the identity authentication endpoint.

## Description

### BACKGROUND

Modem computer and network security depend on secret data (e.g., "secrets") that enforce various levels and types of security. Examples of such secrets include authentication tokens, encryption keys, certificates, passwords, database connections, or the like. In some instances, such secrets must be securely installed on all devices that operate within a system to enable authenticated communications and access to necessary data. Manual methods for tracking trusted secrets are burdensome to manage and are prone to mistakes. Accordingly, a secure secret store can be used to store and manage trust information separately from deployed applications, virtual machines, computing systems, or other entities that utilize the stored secrets.

Secure secret stores minimize the overhead and security risks associated with manually managing trust information. However, systems requiring access to the stored secrets must first be authenticated by the secure secret store. Virtual machines (VMs) often use a managed service identity ('MSI') token for authentication that is stored locally on the host device (e.g., VM host). The token may only be accessible from within the VM via a special internet protocol (IP) address. The authentication of the VM at the special IP address is based on the virtual network interface card (vNIC) through which the VM transmits the HTTP request to the special IP address. Because all traffic from software executing within the VM is directed through the vNIC, the token is accessible via any software executed within the VM by sending an HTTP request to the special IP address. The software may then use the token to obtain access to the secure secret store, among other identity products.

Several issues, however, arise from the use of tokens that authenticate any software within a VM to allow access to critical secrets. First, the entire VM is considered "trusted" and thus can be authenticated to access secrets, even though certain software within the VM may be untested, potentially malicious, or otherwise untrusted. This assumption that the entire VM is trusted, therefore, introduces vulnerabilities that may allow untrusted and potentially malicious code executing within a VM to access the secrets of an entire system. Additionally, HTTP is an unauthenticated protocol for requesting tokens and supports proxy server requests (e.g., where intermediary servers operate as a proxy to send the HTTP requests on behalf of the client). Accordingly, vulnerabilities in a customer workload, such as server-side request forgery (SSRF), executing within a trusted VM may grant unauthorized access to critical secrets.

### SUMMARY

According to embodiments of the present disclosure, various methods, apparatus, and products for trust establishment for cloud computing environments are described herein. In some aspects, trust establishment for cloud computing environments, includes establishing an initial trust between an intermediary component of a computing environment and a host of the computing environment; intercepting, by the intermediary, a request from software executing within the computing environment to an identity authentication endpoint; determining, by the intermediary, whether to authenticate the software; in response to determining to authenticate the software, applying, by the intermediary, a digital signature to the request; and forwarding the request, with the digital signature, to the identity authentication endpoint.

In some aspects, an apparatus may include a memory and one or more processing devices, operatively coupled to the memory, the one or more processing devices configured to perform similar steps. In some aspects, a computer program product comprising a computer readable storage medium may store computer program instructions that, when executed, perform similar steps.

### BRIEF DESCRIPTION OF DRAWINGS

Fig. 1 sets forth a diagram of an example system for tamper resistant secrets bootstrapping in accordance with some embodiments.
Fig. 2 sets forth a diagram illustrating an example system for identity authentication of software within a computing environment using an intermediary in accordance with some embodiments.
Fig. 3 sets forth a flow chart illustrating an example method of identity authentication using tamper resistant secrets bootstrapping in accordance with some embodiments.
Fig. 4 sets forth a flow chart illustrating an additional example method of identity authentication using tamper resistant secrets bootstrapping in accordance with some embodiments.
Fig. 5 sets forth a flow chart illustrating an additional example method of identity authentication using tamper resistant secrets bootstrapping in accordance with some embodiments.
Fig. 6 sets forth a diagram illustrating a process flow among components of a system using a vTPM for tamper resistant secret bootstrapping in accordance with some embodiments.
Fig. 7 sets forth a diagram illustrating a process flow among components of a system using a mounted virtual disk for tamper resistant secret bootstrapping in accordance with some embodiments.
Fig. 8 sets forth a diagram illustrating a process flow among components of a system using a hypervisor socket for tamper resistant secret bootstrapping in accordance with some embodiments.
Fig. 9 sets forth a diagram illustrating a process flow among components of a system using a trusted delegate for tamper resistant secret bootstrapping in accordance with some embodiments.
Fig. 10 illustrates an exemplary computing device that may be specifically configured to perform one or more of the processes described in the present disclosure.
Fig. 11 sets forth a block diagram of a cloud service provider service architecture in accordance with some embodiments.

### DESCRIPTION OF EMBODIMENTS

In cloud environments, managing trust information (e.g., secrets) can be a difficult task. A secure secret store can manage and store trust information across various computing environments (e.g., VMs, containers, etc.) offered by a cloud service provider, alleviating the burden on cloud customers. To access secrets stored in the secure secret store, each computing environment may need to authenticate with the secure secret store using a separate secret. This separate secret may be, for example, a managed service identity (MSI) token that is generated and stored locally at a host device (e.g., the host device on which the computing environment executes). The process of obtaining this separate secret that is used for initial authentication with the secure secret store is referred to herein as secret "bootstrapping."

Bootstrapping the computing environment with the secret(s) for accessing resources can include issuing an authentication request from the computing environment to a dedicated network address (e.g., IP address). The dedicated network address may be associated with an identity authentication endpoint operating at the host device. Upon receiving the authentication request, the authentication endpoint determines the identity of the computing environment based on the network from which the request is received. Accordingly, the authentication endpoint can then return an authentication token for the computing environment based on the determined identity.

The current bootstrapping process described above, however, can expose vulnerabilities from untrusted code deployed within the computing environment. For example, network traffic from other applications executing in a VM is directed through the networking device of the VM and therefore any authentication request from such applications to the identity authentication endpoint will be able to obtain the authentication token. Furthermore, the protocol used in the current secrets bootstrapping process (e.g., hyper-text transfer protocol (HTTP)) is ubiquitous, operates without authentication, and is designed to work with proxy servers which introduces several vulnerabilities. One particular vulnerability includes server-side request forgery (SSRF) where a maliciously crafted HTTP request to the VM, or software in the VM operating as a server, may cause the VM (e.g., the server) to retrieve and forward the authentication token to the malicious actor. An additional vulnerability results when one VM is deployed within another (e.g., nested virtualization). If the nested VM has access to the networking device of the parent VM, then the nested VM could authenticate by using the networking device of the parent VM even if the nested VM should not be authorized to access the internal secrets of the parent.

To address these shortcomings, the approaches set forth herein provide for an intermediary process or device to intercept requests for secret bootstrapping and to distinguish between trusted and untrusted code in a computing environment prior to forwarding the bootstrapping request to the identity authentication endpoint. More specifically, the traffic that is directed to the authentication endpoint may be intercepted by the intermediary and, if trusted, digitally signed by the intermediary with an initial secret that is issued during provisioning of the computing environment. The identity authentication endpoint may also be updated to only return the managed identity token if the request has been digitally signed by the intermediary with the initial secret.

To provide the intermediary capabilities to authenticate only trusted software, an initial trust is first established between the intermediary of the computing environment and the host. To establish the initial trust between the intermediary and the host, the host and the intermediary may establish and interchange secrets for trust during initial provisioning of the computing environment and before any additional software is deployed to the computing environment (e.g., during a safe period). For example, the intermediary can be established during provisioning (e.g., via the VM image or via download and install of the intermediary), after which the initial secrets for the intermediary are established by the host and shared to the intermediary. Accordingly, this initial secret can be used by the intermediary to selectively sign requests to the managed identity endpoint and therefore selectively authenticate trusted software of the computing environment with the host. Additionally, any requests to the managed identity endpoint that somehow circumvent the intermediary will be rejected because they will not include the necessary signature from the intermediary.

Such use of an intermediary to establish an initial trust with the host and subsequently sign only trusted authentication requests provides significantly better cloud security than conventional systems while minimizing the impacts to customers. In particular, the intermediary can transparently intercept network traffic (e.g., HTTP requests) and therefore does not require any upgrades or changes to customer software or the manner in which that software is deployed. As such, embodiments provide several security benefits to cloud customers without interfering with the deployments of the customers. Additionally, the intermediary provides passive inspection of the outgoing HTTP requests to the managed identity endpoint and therefore does not invade or inspect customer workloads. Similarly, the intermediary provides compatibility with confidential computing in which customer workloads are not accessible by the host. Therefore, embodiments establish increased confidence in security of cloud computing workloads while minimizing impacts to customer experience in cloud computing platforms. Similarly, various embodiments can also provide similar benefits of security by deploying an intermediary and bootstrapping secrets to the intermediary without reprovisioning previously deployed environments. Accordingly, embodiments provide a preferable cloud computing environment in comparison to current cloud computing systems.

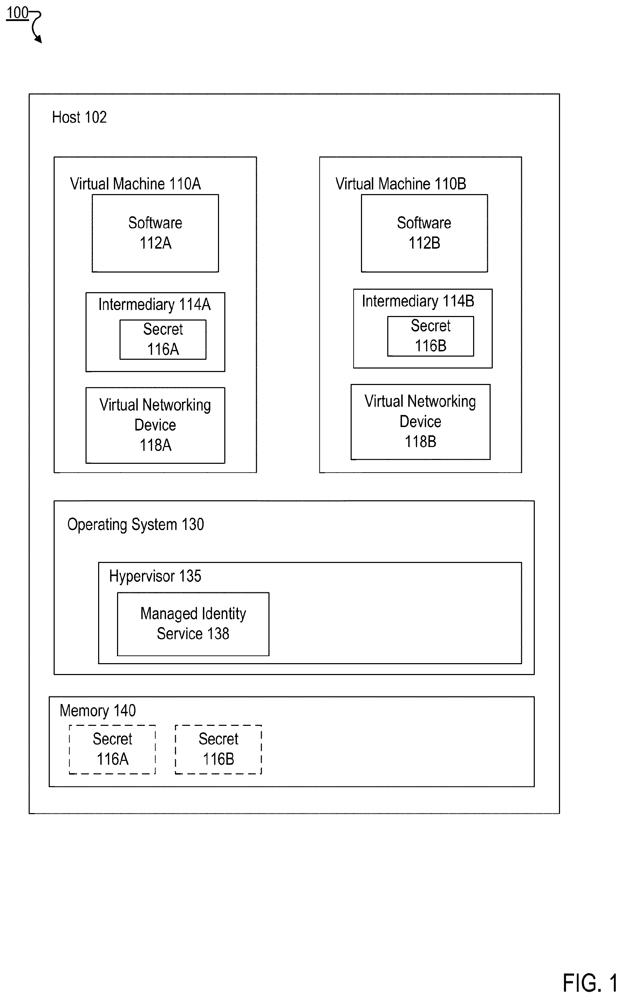

Fig. 1 sets forth an example system 100 for tamper resistant secrets bootstrapping in accordance with some embodiments. The example system 100 of Fig. 1 includes a host 102 executing one or more computing environments such as virtual machines 110A-B. Although described herein with respect to virtual machines, embodiments may also be applied to any computing environment, such as containers, serverless operators, sandbox environments, or any other virtual or cloud-based computing environments. Embodiments may also apply to physical computing devices using identity-based authentication.

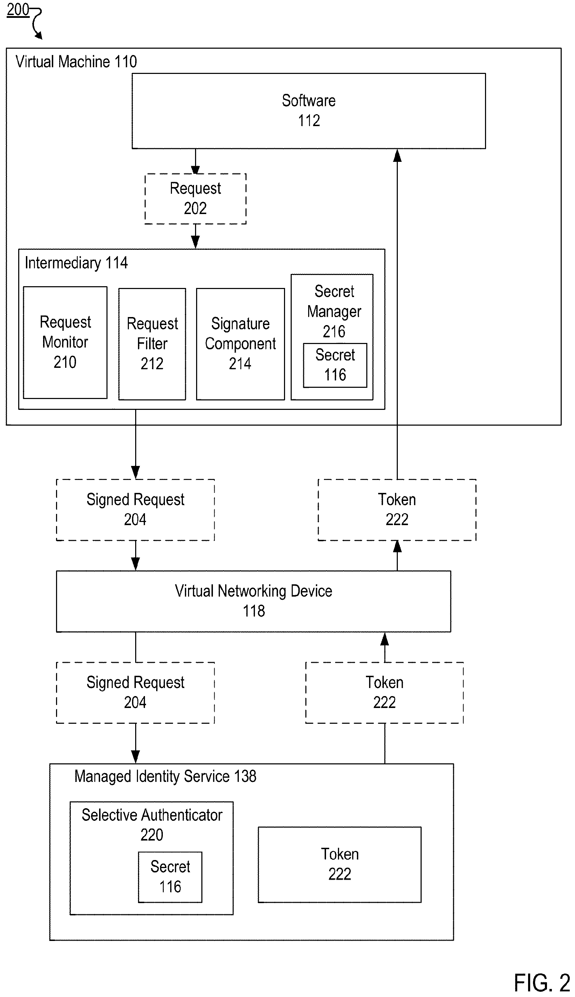

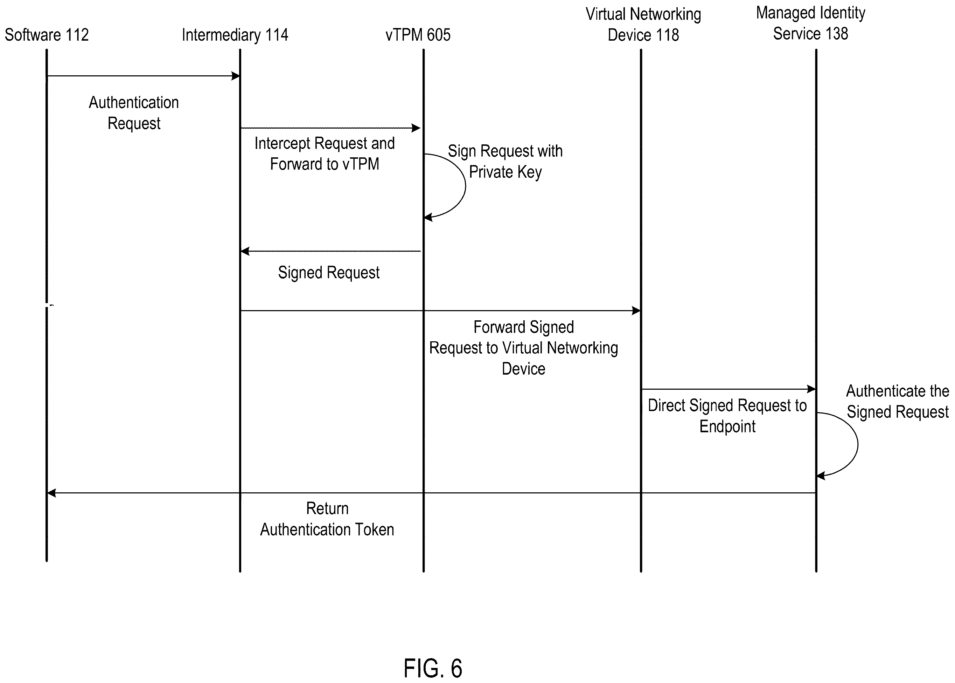

As discussed above, when a VM is provisioned by a hypervisor, otherwise referred to as a VM manager, the hypervisor may generate an initial secret for each VM that is stored with and is exclusively accessible by an intermediary component deployed to each VM upon provisioning. For example, as depicted in Fig. 1, a hypervisor 135 executed by, or in conjunction with an operating system 130 of the host 102, may provision virtual machine 110A and virtual machine 110B. The provisioning of each virtual machine 110A-B may include instantiating each VM from a VM image by allocating computing resources, initiating an OS for the VM, and downloading any additional software indicated by the VM image. The provisioning may further include generating, by the host 102, a secret that is shared with the intermediary of the VM and which is only accessible by the particular intermediary from within the VM. For example, during provisioning of virtual machine 110A, the hypervisor 135 may cause the host 102 to generate secret 116A which the hypervisor 135 then provides to the intermediary 114A. In some embodiments, the hypervisor 135 first instantiates the VM 110A and the intermediary 114A, as well as virtual networking components such as VNIC 118A. The hypervisor 135 may communicate the secret 116A to the intermediary 114A prior to completion of provisioning VM 110A (e.g., during a safe period when the VM 110A is not in communication with systems beyond host 102). The hypervisor 135 may also provide the secret 116A to a managed identity service 138 to be stored in memory 140 of the host 102. Accordingly, only the intermediary 114A and the managed identity service 138 may be aware of secret 116A. Similarly, a secret 116B may be generated for VM 110B during provisioning and shared with intermediary 114B before provisioning is complete (e.g., via VNIC 118B). Thus, VM 110A and 110B may each include an intermediary 114A-B with a unique secret 116A-B. As discussed in more detail below with respect to Fig. 2, the intermediaries 114A-B may intercept requests from software 112A-B (e.g., applications, functions, services, etc.) executing within the VMs 110A-B to the managed identity service 138 and selectively sign, via the secret 116A-B, the intercepted requests that are from a trusted source. The intermediary 114A-B may then forward the signed request to the managed identity service 138 for identity authentication. The method of signature by the intermediary 114A-B may vary, embodiments of which are described in more detail below with respect to Figs. 6-9.

Managed identity service 138 may include a web API, a separately operating service at the host 102, or a service operating within hypervisor 135, as depicted. The managed identity service 138 may perform authentication of a VM or software in the VM based on a virtual networking device, such as a virtual networking interface card (vNIC) or other virtual networking component from which an authentication request is received. For example, managed identity service 138 may receive an authentication request from virtual networking device 118A of VM 110A. The managed identity service 138 may thus determine the identity of the requestor as VM 110A because the request was received from virtual networking device 118A. In addition, in embodiments described herein, the managed identity service 138 may further determine whether the request is signed by the secret from the intermediary of the corresponding VM. For example, the managed identity service 138 may validate an authentication request from VM 110B only if the request received from the virtual networking device 118B is signed by secret 116B. Upon a validated authentication request in which the request is signed by the proper secret from the corresponding VM, the managed identity service 138 may return an authentication token (e.g., an MSI token) that the requesting application or VM can use to access other resources that the VM is authorized to access.

As such, approaches described herein provide for the advantage of individually and selectively authenticating applications and other software executing within a VM. Furthermore, because authentication requests are signed by an intermediary operating within the VM and only the intermediary and managed identity service 138 have access to the secret, embodiments provide for much more secure identity-based authentication.

For further explanation, Fig. 2 sets forth another example system 200 in which software of a computing environment (e.g., a VM) can be individually authenticated by an identity management service via an intermediary storing bootstrapped secrets used to selectively sign requests to the identity management endpoint in accordance with some embodiments of the present disclosure. Fig. 2 provides further detail regarding the operation of intermediary 114 and identity management service 138. As discussed above, intermediary 114 may be instantiated along with virtual machine 110 during provisioning. In some examples, the intermediary 114 may be provided as part of a VM image which is instantiated to initialize VM 110. The secret 116, however, is generated by the host of the VM after the intermediary 114 is established but prior to completion of the provisioning of VM 110. The secret 116 is also provided to the identity management service 138.

After provisioning is complete and the VM 110 is deployed, a user may execute various types of software 112 within the VM 110. Some of the software 112 may be trusted while other software may not be trusted. Thus, only software that is trusted should be allowed access to identity-based resources available to the VM 110. For example, software that is untested and unvalidated may include vulnerabilities that would expose the entire VM and any resources available to the VM to malicious actors if such software were allowed to be authenticated to access identity-based resources of the VM. Therefore, each request 202 from software 112 of the VM 110 for authentication that is directed to identity management service 138 may be intercepted by intermediary 114 prior to forwarding the request 202 to the identity management service 138. The intermediary 114 may include a request monitor 210, request filter 212, a signature component 214, and a secret manager 216. The request monitor 210 may monitor network traffic of software 112 of the VM 110 and identity traffic that includes a request to the identity management service 138. For example, the identity management service 138 may include an API endpoint associated with a particular IP address. Therefore, the request monitor 210 may identity any HTTP requests that are directed to that API endpoint address of the identity management service 138. The intermediary 114 may then determine, via request filter 212, whether the request (e.g., request 202) originates from trusted software or untrusted software. Because the intermediary 114 operates within the virtual machine 110, it has a full view of the entire context of the virtual machine 110 and can therefore determine from which software the request is received from. If the request filter 212 identifies the request 202 as being received from an untrusted source, the request is dropped and not forwarded to the identity management service 138. If, however, the request is from a trusted source, the intermediary 114 may apply a digital signature to the request 202 (e.g., via signature component 214) using secret 116. For example, the signature component 214 may retrieve the secret 116 from secret manager 216 and use the secret 116 to apply the digital signature. In some embodiments, applying the digital signature includes generating a unique cryptographic hash of the request and encrypting the hash using the secret 116. Accordingly, the digital fingerprint applied to the request can only be verified with a corresponding public key of the secret 116. In other embodiments, applying the digital signature includes any form of digital signature application using a secret, as is known. As described in more detail with respect to Figs. 6-9, secret manager 216 may be implemented in various ways, including as a virtual device driver, a mounted virtual disk, a hypervisor socket, or a virtual trusted platform module (vTPM).

Upon applying the digital signature to the request 202 using the secret 116, the intermediary may forward the signed request 204 to the identity management service 138 via virtual networking device 118. Virtual networking device 118 may be a vNIC assigned specifically to the VM 110 for directing network traffic to and from the VM 110. Because the network traffic from the VM 110 is transmitted through the virtual networking device 118, the identity management service 138 may be unaware of the original source of the request. The information used by the identity management service 138 to identify and authenticate an identity authentication request may include the network address of the virtual networking device 118 assigned to the VM 110. Thus, the identity management service 138 may authenticate and provide a token 222 in response to the request if the address of the virtual networking device 118 for the VM 110 matches the information stored by the identity management service 138. The identity management service 138 can therefore identify and authenticate requests from VM 110 based on the address of the virtual networking device 118. Additionally, the identity management service 138 may include a selective authenticator 220 that also requires that the authentication request be signed using the corresponding secret 116. For example, selective authenticator may receive signed request 204 and determine if the digital signature of the signed request 204 was generated using the secret 116. If the selective authenticator 220 confirms that the secret 116 corresponding to the VM 110, then the identity management service 138 may return an authentication token 222 to the requesting software 112. Otherwise, if the selective authenticator 220 determines that the request has not been signed using the corresponding secret, then the identity management service 138 rejects the authentication request. Accordingly, even if the identity management service 138 receives an authentication request from a valid virtual networking device, the request will not be authenticated unless it is also signed by the corresponding secret with which the VM was initially bootstrapped with during provisioning.

Approaches described herein, therefore provide for transparent monitoring and intercepting of identity authentication requests to provide additional security within identity management systems. In particular, SSRF attacks can be prevented using the secret bootstrapping described herein, while minimizing inconveniences or changes to customer workloads.

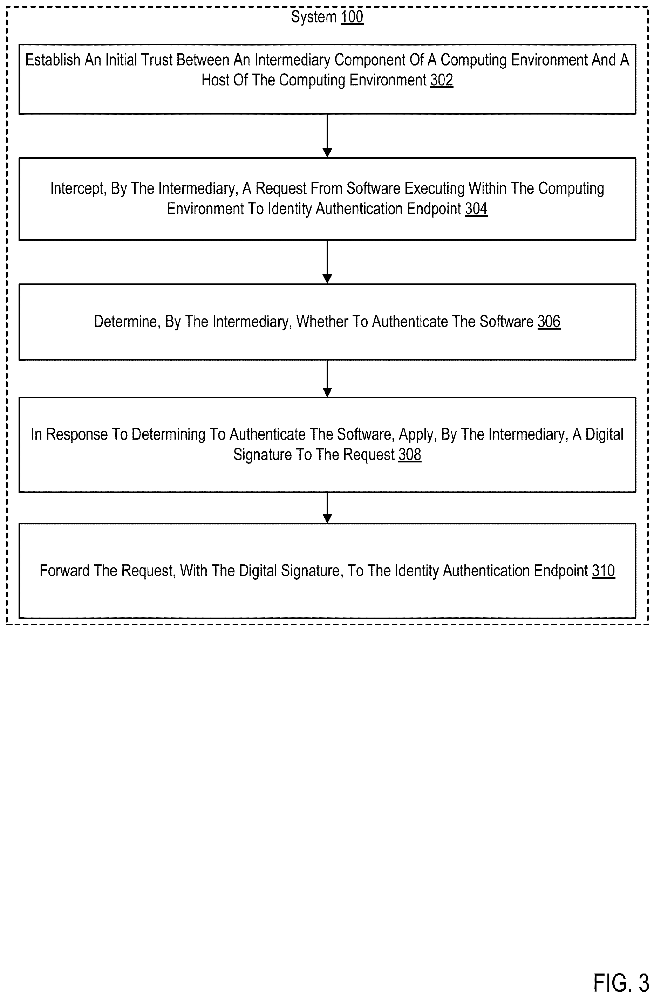

For further explanation, Fig. 3 sets forth a flowchart of an example method of identity authentication using tamper resistant secrets bootstrapping in accordance with some embodiments of the present disclosure. The method of Fig. 3 may be performed, for example, in the system 100 of Fig. 1, the system 200 of Fig. 2, or in another computing system or computing environment as can be appreciated.

The method of Fig. 3 includes establishing 302 an initial trust between an intermediary component of the computing environment and a host of the computing environment. In some embodiments, the initial trust may be established during the initial provisioning of the computing environment. The provisioning period of the computing environment may include a time period prior to establishing any connections of the computing environment outside the host. For example, provisioning may include the instantiation of the computing environment, such as initializing a VM from a VM image, the allocation of resources to the computing environment, and initializing components within the computing environment (e.g., operating system, drivers, networking components, etc.). Accordingly, during the provisioning all software and components within the VM are trusted and there is no external communications between the VM and devices external to the host. Establishing 302 the initial trust may include an exchange of a secret between the host and the intermediary component. The secret may include any type of trust information, such as a token, password, key, etc. that is known only to the host (e.g., via an identity authentication endpoint) and the intermediary component. In some embodiments, the computing environment is a VM, a container, a serverless operator, sandbox, or any other virtualized execution environment.

In some embodiments, the intermediary component is a software delegate deployed within the computing environment, such as a virtual device driver or other software deployable to the computing environment. In such an embodiment, the initial trust is established 302 during the initial provisioning of the computing environment to provide secure communication of secrets between the hypervisor and the intermediary component. In some embodiments, the intermediary component stores the secret associated with the initial trust in memory accessible only to the intermediary component. In some embodiments, the initial trust is established 302 by mounting a virtual disk to the VM that includes the secret. In other embodiments, the initial trust is established 302 using hypervisor sockets (e.g., shared memory spaces between VM and hypervisor) to store the secret in memory accessible to the intermediary component and the hypervisor. Alternatively, the initial trust may be established 302 by allocating a vTPM to be used by the intermediary component.

The method of Fig. 3 further includes intercepting 304, by the intermediary, a request from software executing within the computing environment to an identity authentication endpoint of the host. In some embodiments, all outgoing network traffic from the computing environment may be routed through the intermediary. For example, the hypervisor may configure the computing environment to direct network requests to the intermediary. Accordingly, each network request routed through the virtual networking device of the computing environment may first be directed to the intermediary and then forwarded to the virtual networking device. Therefore, to intercept the request the intermediary may identify the request as being directed to the identity authentication endpoint and signing, as discussed below, the request prior to forwarding the request to the virtual networking device. In some embodiments, the intermediary may passively monitor network traffic (e.g., via snooping or sniffing of network traffic) directed to the virtual networking device. For example, at least some data from the network request may be duplicated, mirrored, or otherwise detected, by the intermediary to allow the intermediary to determine if a corresponding request is directed to the identity authentication endpoint. If the intermediary identifies a request that is directed to the identity authentication endpoint, the intermediary may cause the request to be redirected (e.g., by the virtual networking device, or prior to the virtual networking device) to the intermediary for applying the signature to the request.

The identity authentication endpoint may include a managed identity service, as discussed above. The software executing within the computing environment may include an application deployed to the computing environment by the user or may include software that has been downloaded during instantiation and set up of the computing environment, software included in the VM image, or any other software that is operable within a computing environment. Some software in the computing environment may be trusted to access resources available to the computing environment via identity-based authentication. Other software in the computing environment may be untrusted. Trusted software may include software that was included in the VM or container image, downloaded from a trusted source, or otherwise indicated as trusted by a user of the computing environment. Untrusted software may be software that is still being tested or developed, or that otherwise may include malicious code or vulnerabilities.

In some embodiments, the request to the identity authentication endpoint may include an identity-based authentication request to access resources available to the computing environment. For example, the request may be an HTTP request directed to the identity authentication endpoint requesting an authentication token. In other embodiments, the request may include any form of authentication request via any local communication protocol. The identity authentication service may include a web API or endpoint to which computing environments can direct requests for a key, token, or other secret, used to identify and authenticate the computing environment with a secure secrets store and other resources of the computing environment. The identity authentication service may include a service executed by the host device to receive and determine, based on a virtual networking component from which the request is received, the identity of the requesting computing environment and to return a corresponding key, token, or other secret, to the environment. As discussed in more detail below, the identity authentication service may further determine whether to authenticate the request based on whether the request is signed by the intermediary.

The method of Fig. 3 further includes determining 306, by the intermediary whether to authenticate the software. For example, to determine 306 whether to authenticate the software, the intermediary may identify the software making the request and determine if the software is trusted. Because the intermediary operates within the computing environment, the intermediary has a full view of the context of the computing environment, and can identify the source of the request (e.g., the software). Once the source software is identified, the intermediary may then determine if the source software is trusted. For example, the intermediary may reference a list of trusted (e.g., an allow list) software executing within the computing environment or untrusted software (e.g., a block list) to determine whether the source software is trusted. The trusted software, for example, may include software that was instantiated from a VM image or container image, software that was downloaded from a trusted source, or other software that is indicated as trusted (e.g., by a user, by a security system, security scan, or other authority). If the intermediary determines that the software is trusted, then the intermediary may determine that the software should be authenticated. In some embodiments, all software executing within the computing environment may be trusted by default or untrusted by default. A user or administrator may then update the list of trusted software to address software that is added to the computing environment, that is changed or being tested within the computing environment, etc.

The method of Fig. 3 further includes, in response to determining to authenticate the software, applying 308, by the intermediary, a digital signature to the request based on the initial trust. Applying 308 the digital signature may include applying a hash function to the data in the request and the secret (e.g., appended together) to get a hash value. The intermediary may then attach the hash value to the original request. The hash value can then be used by the identify authentication endpoint to determine whether the secret was used to sign the request. In some embodiments, applying 308 the digital signature may include encrypting the request using the secret as an encryption key. In other embodiments, applying 308 the digital signature to the request includes inserting a unique value generated based on the secret. Accordingly, if the requesting software is trusted, the intermediary signs the request from the software to indicate that the identity authentication endpoint should authenticate the request. It should be noted that applying 308 the digital signature may include applying or generating a digital signature using the secret (e.g., from the initial trust) via any known method of digitally signing data.

The method of Fig. 3 further includes forwarding 310 the request, with the digital signature, to the identity authentication endpoint. The request may be directed to the virtual networking device of the computing environment which then transmits the request to the identity authentication endpoint. The identity authentication endpoint may then identify the computing environment from which the request is received (e.g., via the address of the virtual networking device) and identify the corresponding secret associated with the computing environment. The identity authentication endpoint may then determine if the received request was signed using the corresponding secret. If the request is signed, then the identity authentication endpoint can determine that the request is from a trusted source from within the computing environment and return an authentication token to the requesting software.

The approaches set forth above provide for selective authentication of software executing within a computing environment. The selective authentication allows for more granular access to resources associated with a computing environment and increases security for the computing environment and the resources accessible by the computing environment. In particular, only trusted software of a computing environment can gain access to trust information for the computing environment to access the various resources and data available to the computing environment.

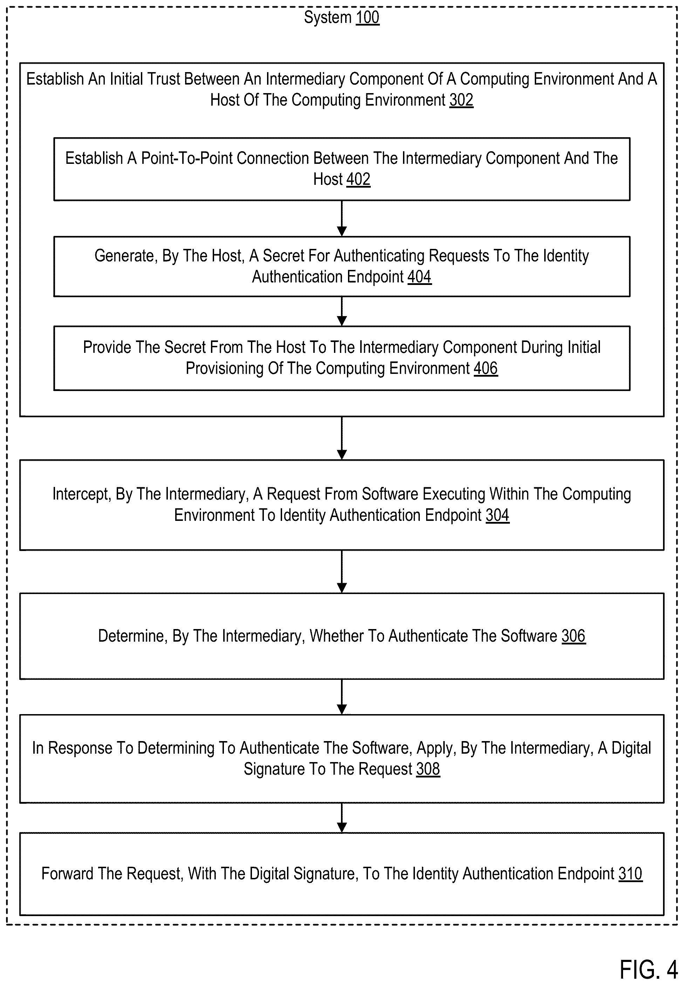

For further explanation, Fig. 4 sets forth a flowchart of another example method of identity authentication using tamper resistant secrets bootstrapping in accordance with some embodiments of the present disclosure. The method of Fig. 4 may be performed, for example, in the system 100 of Fig. 1, the system 200 of Fig. 2, or in another computing system or computing environment as can be appreciated.

In the method of Fig. 4 establishing 302 an initial trust between an intermediary component of the computing environment and a host of the computing environment includes establishing 402 a point-to-point connection between the intermediary component and the host, generating 404, by the host, a secret for authenticating requests to the identity authentication endpoint, and providing 406 the secret from the host to the intermediary component via the point-to-point connection during initial provisioning of the computing environment.

Establishing 402 a point-to-point connection between the intermediary component and the host may include providing a communication channel directly between the intermediary component and an operating system of the host. For example, the communication channel may include internal host communications between virtual hardware components executed within the host. In some embodiments, a hypervisor may establish 402 the point-to-point connection between the intermediary component of the computing environment and the host (e.g., the service of the host establishing and/or storing the secret). The host (e.g., an operating system of the host) can randomly generate 404 the secret for authentication requests via any method of random secret generation, such as a random number generator, hardware-based random number generation, etc. Therefore, the secret may be unique to each computing environment provisioned by the host. The secret may be any form of trust information, such as authentication tokens, encryption keys, certificates, passwords, database connections, etc. In some embodiments, the host provides 406 the secret to the intermediary component via the direct communication channel during the initial provisioning such that only the host and the intermediary has access to the secret. Because the secret is provided during the initial provisioning while the computing environment is not in communication with or accessible to devices external to the host, the secret is securely exchanged with the intermediary component. Similarly, the host can provide the secret to the identity authentication endpoint so that the secret can be used to sign and authenticate requests from trusted software as described herein.

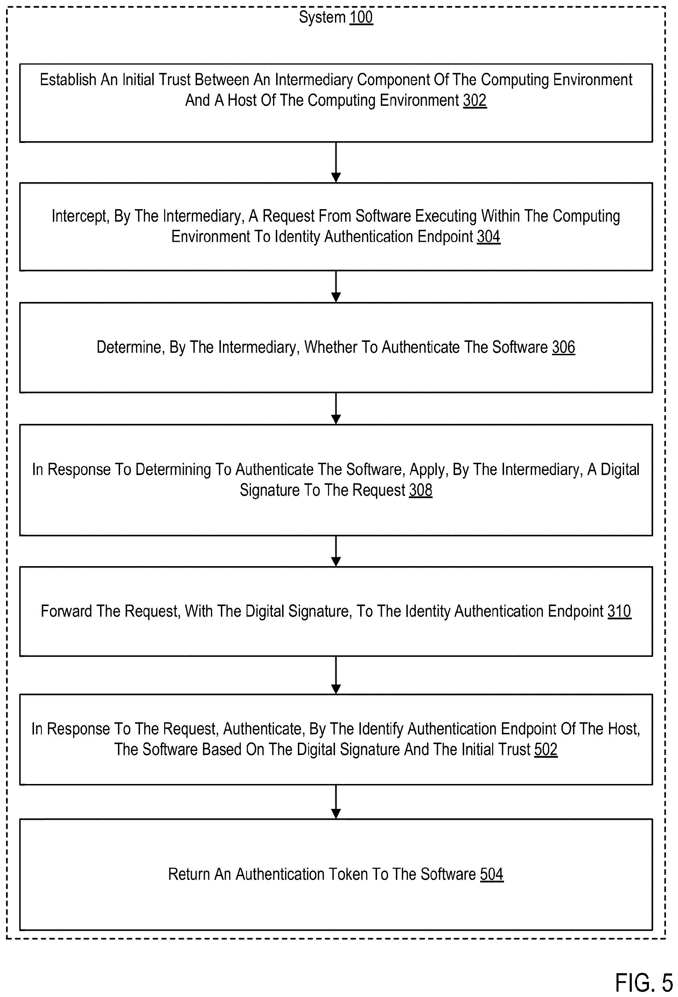

For further explanation, Fig. 5 sets forth a flowchart of another example method of identity authentication using tamper resistant secrets bootstrapping in accordance with some embodiments of the present disclosure. The method of Fig. 5 may be performed, for example, in the system 100 of Fig. 1, the system 200 of Fig. 2, or in another computing system or computing environment as can be appreciated.

The method of Fig. 5 includes, in response to receiving the request, authenticating 502, by the identity authentication endpoint of the host, the software based on the digital signature and the initial trust, and returning 504 an authentication token to the requesting software. The identity authentication endpoint may include a service to determine whether a source of an identity authentication request is valid, trusted, and should be authenticated (e.g., provided an authentication token). The identity authentication endpoint may receive the request from a virtual network device that is specifically designated to and used by the computing environment. For example, each provisioned computing environment may be assigned at least one virtual networking device through which the computing environment receives and sends network communications (e.g., HTTP requests). Conventionally, the identity authentication endpoint would determine the computing environment from which the request was received based on the address of the virtual networking device and return an authentication token to the requesting software as long as the computing environment is authenticated (e.g., via a list of computing environments that are authorized to access a set of resources), without regard to which software within the computing environment sent the request. As described herein, to authenticate 502 the software, the identity authentication endpoint may further determine whether the request is signed by the intermediary using the secret provided when establishing the initial trust. As discussed above, because the intermediary only signs requests from software of the computing environment that is trusted, the identity authentication endpoint only authenticates 502 a received request if the request is signed with the secret. Therefore, the identity authentication endpoint, in conjunction with the intermediary, can selectively authenticate 502 trusted software and prevent authentication of untrusted software. The identity authentication endpoint thus only returns 504 an authentication token to trusted software upon determining that the request is signed using the secret.

For further explanation, Figs. 6-9 illustrate process flows among components of a system using tamper resistant secret bootstrapping with various implementations of the intermediary and secret management. As depicted in Fig. 6, the intermediary 114 may include or may be in communication with a vTPM 605 to sign requests from trusted software of a computing environment. In particular, software 112 may transmit an authentication request directed to managed identity service 138. Intermediary 114 may intercept the authentication request and determine whether the requesting software 112 is trusted. If trusted, the intermediary 114 forwards the request to vTPM 605 which then signs the request with a private key and returns the signed request to the intermediary 114. For example, the vTPM 605 may include an asymmetric key pair including a private key that is used to sign the request and a public key used to identify the vTPM 605.

The intermediary 114 may then forward the signed request to the virtual networking device 118 assigned to the computing environment. The virtual networking device 118 may direct the signed request to the managed identity service 138. The managed identity service 138 then authenticates the signed request based on the signature in the request and the bootstrapped secret of the intermediary 114 (e.g., via the vTPM). For example, the managed identity service 138 may know the public key of the vTPM 605 which can then be used to determine if the request was signed by the private key of the vTPM 605. The managed identity service 138 may then return an authentication token corresponding to the identity of the computing environment (e.g., determined form the virtual networking device 118 associated with the computing environment).

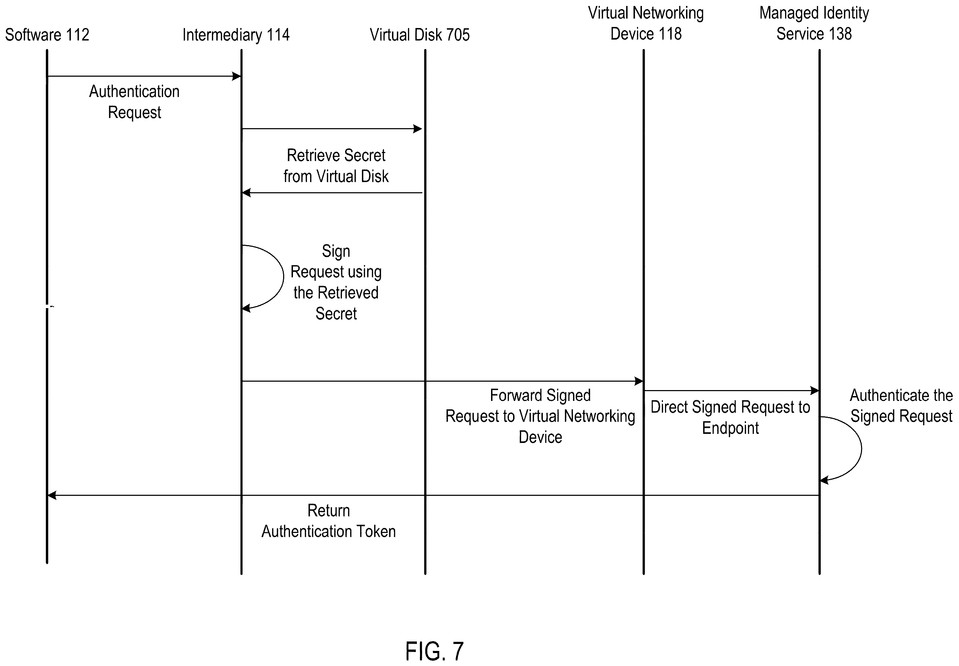

In another embodiment, as depicted in Fig. 7, the intermediary 114 may mount a virtual disk 705 that stores the secret for signing identity authentication requests from trusted software of the computing environment. In some embodiments, the virtual disk 705 may only store the secret and may only be accessible by the intermediary 114. Accordingly, the intermediary 114 may intercept an authentication request from software 112 and retrieve the secret from the virtual disk 705. The intermediary 114 may then sign the request using the secret retrieved from the virtual disk 705. In some embodiments, the virtual disk 705 may be instantiated during or after the initial provisioning of the computing environment. The host may generate and store the secret in the virtual disk 705. The hypervisor or virtual machine manager of the computing environment may then provide the virtual disk 705 to the intermediary 114 for mounting. In some embodiments, the virtual disk 705 may be mounted by the computing environment and then access privileges to the virtual disk 705 may be provided to the intermediary 114. After signing the authentication request from software 112, the intermediary may forward the signed request to the virtual networking device 118 which may then direct the signed request to the managed identity service 138. The managed identity service 138 then authenticates the signed request based on the signature in the request and the bootstrapped secret of the intermediary 114 (e.g., the secret stored at the virtual disk 705). The managed identity service 138 may then return an authentication token corresponding to the identity of the computing environment (e.g., determined form the virtual networking device 118 associated with the computing environment).

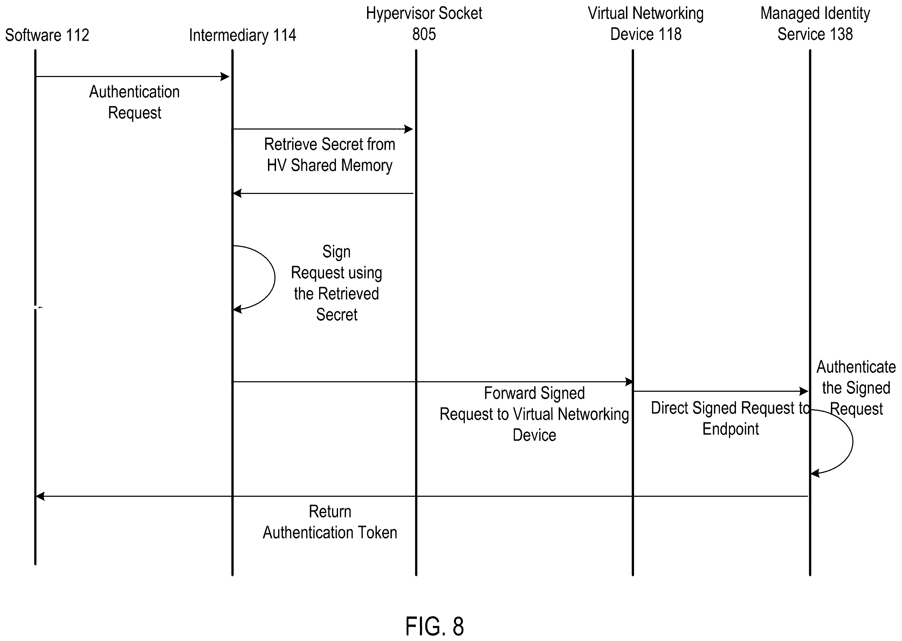

In another embodiment, as depicted in Fig. 8, intermediary 114 may be given access to the secret during or after initial provisioning via a hypervisor socket 805. For example, hypervisor socket 805 may include a memory space of the host shared by the hypervisor or virtual machine manager and the intermediary 114 of the computing environment. Accordingly, the hypervisor may store the secret in the hypervisor socket 805 (e.g., shared memory space) which may only be accessible by the hypervisor and the intermediary 114. Accordingly, intermediary 114 may intercept an authentication request from software 112, and if the software is trusted, retrieve the secret from the shared memory space of the hypervisor socket 805. The intermediary 114 may then sign the request using the secret retrieved from the hypervisor socket 805 and forward the signed request to the virtual networking device 118. The virtual networking device 118 may direct the signed request to the managed identity service 138. The managed identity service 138 then authenticates the signed request based on the signature in the request and the bootstrapped secret of the intermediary 114 (e.g., via the hypervisor socket 805). The managed identity service 138 may then return an authentication token corresponding to the identity of the computing environment (e.g., determined form the virtual networking device 118 associated with the computing environment).

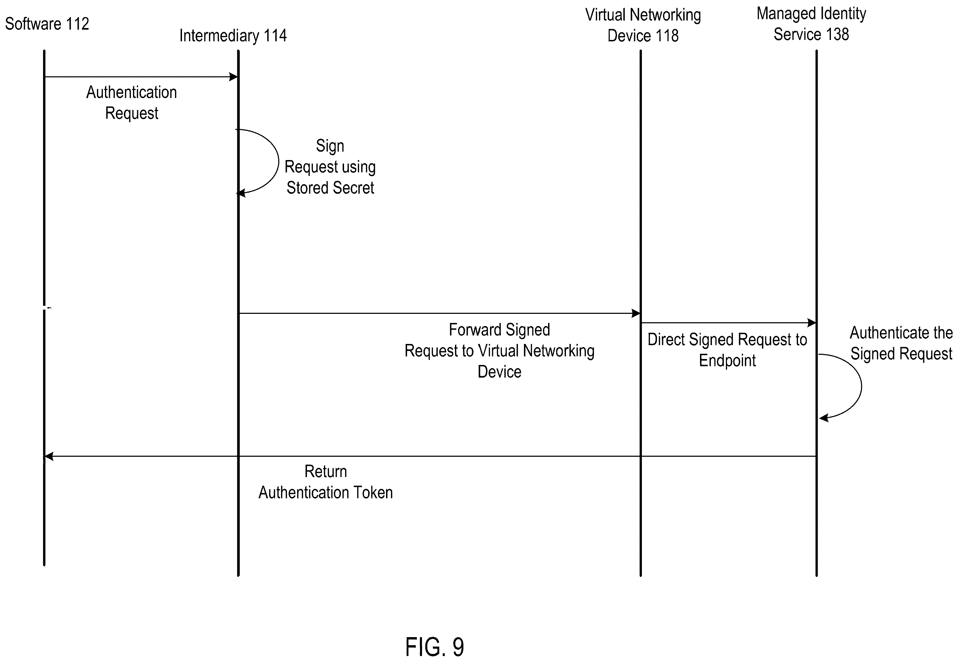

In another embodiment, as depicted in Fig. 9, intermediary 114 may be a software component, such as a virtual device driver or other software, deployed within a computing environment. The intermediary 114 may establish an initial trust with the host of the computing environment during an initial provisioning of the computing environment. For example, during provisioning of the computing environment, a secure point-to-point connection may be established between the intermediary 114 and the host (e.g., the managed identity service 138 executed by the host) through which initial trust information can be exchanged during the initial provisioning. Thus, the intermediary may store and have access to the initial trust information and can use the initial trust information to selectively sign authentication requests from software of the computing environment. As depicted, intermediary 114 may intercept an authentication request from software 112, and if the software is trusted, sign the request using the trust information established during the initial provisioning (e.g., a secret). The intermediary may then forward the signed request to the virtual networking device 118. The virtual networking device 118 may direct the signed request to the managed identity service 138. The managed identity service 138 then authenticates the signed request based on the signature in the request and the bootstrapped secret of the intermediary 114. The managed identity service 138 may then return an authentication token corresponding to the identity of the computing environment (e.g., determined form the virtual networking device 118 associated with the computing environment).

The reader can appreciate that the various embodiments discussed above each provide for selective authentication of software executing within a computing environment. Such selective authentication, which is provided by each of the varying embodiments, allows for more granular access to resources associated with a computing environment and increases security for the computing environment and the resources accessible by the computing environment. In particular, only trusted software of a computing environment can gain access to trust information for the computing environment to access the various resources and data available to the computing environment. Additionally, embodiments provide for better overall security for secrets associated with a computing environment by preventing the potential for malicious actors to obtain identity based authentication to secure information via establishment of an initial trust (e.g., secret bootstrapping) between a host and an intermediary component of a computing environment.

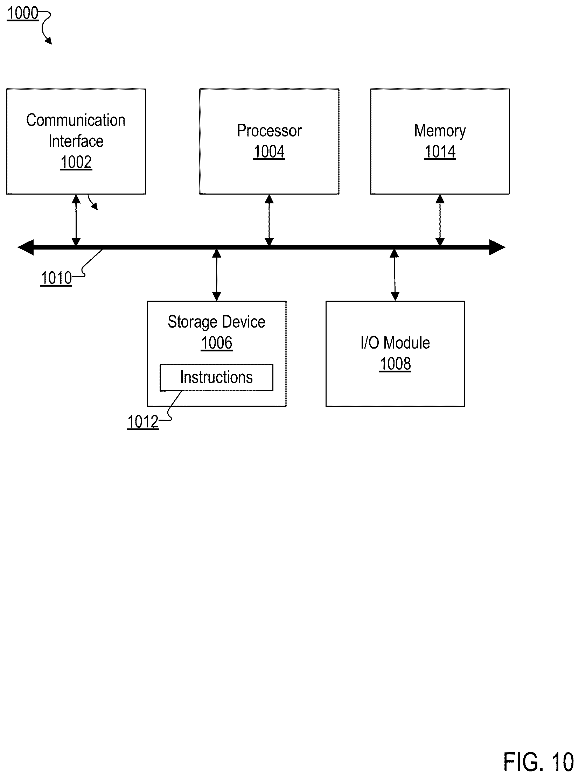

For further explanation and as an additional example of a supporting technology for performing the actions described above, Fig. 10 illustrates an exemplary computing device 1000 that may be specifically configured to perform one or more of the processes described herein. As shown in Fig. 10, computing device 1000 may include a communication interface 1002, a processor 1004, a storage device 1006, an input/output (I/O) module 1008, and computer memory 1014 communicatively connected one to another via a communication infrastructure 1010. While an exemplary computing device 1000 is shown in Fig. 10, the components illustrated in Fig. 10 are not intended to be limiting. Additional or alternative components may be used in other embodiments. Components of computing device 1000 shown in Fig. 10 will now be described in additional detail.

Communication interface 1002 may be configured to communicate with one or more computing devices. Examples of communication interface 1002 include, without limitation, a wired network interface (such as a network interface card), a wireless network interface (such as a wireless network interface card), a modem, an audio/video connection, and any other suitable interface.

Processor 1004 generally represents any type or form of processing unit capable of processing data and/or interpreting, executing, and/or directing execution of one or more of the instructions, processes, and/or operations described herein. Processor 1004 may perform operations by executing computer-executable instructions 1012 (e.g., an application, software, code, and/or other executable data instance) stored in storage device 1006.

Storage device 1006 may include one or more data storage media, devices, or configurations and may employ any type, form, and combination of data storage media and/or device. For example, storage device 1006 may include, but is not limited to, any combination of non-volatile media and/or volatile media. Electronic data, including data described herein, may be temporarily and/or permanently stored in storage device 1006. For example, data representative of computer-executable instructions 1012 configured to direct processor 1004 to perform any of the operations described herein may be stored within storage device 1006. In some examples, data may be arranged in one or more databases residing within storage device 1006.

I/O module 1008 may include one or more I/O modules configured to receive user input and provide user output. I/O module 1008 may include any hardware, firmware, software, or combination thereof supportive of input and output capabilities. For example, I/O module 1008 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 1008 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O module 1008 is configured to provide graphical data to a display for presentation to a user. The graphical data may be representative of one or more graphical user interfaces and/or any other graphical content as may serve a particular implementation. In some examples, any of the systems, computing devices, and/or other components described herein may be implemented by computing device 1000.

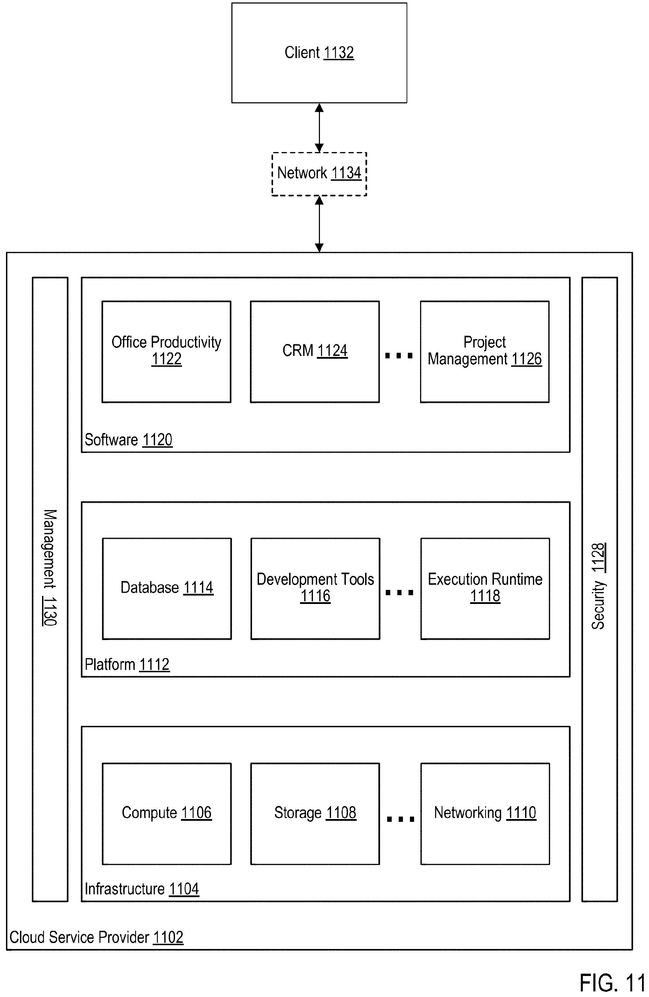

For further explanation and as an additional example of a supporting technology for performing the actions described above, Fig. 11 sets forth a block diagram of a cloud service provider service 1102 architecture in accordance with some embodiments. The cloud service provider can deliver a variety resources to a client 1132 via a network 1134 through a services-based consumption model where resources are consumed on-demand and as-a-service. Cloud service providers can provide services via cloud platforms such as, for example, Microsoft Azure^{™}, Amazon Web Services ('AWS')^{™}, Google Cloud Platform ('GCP')^{™}, and others.

Fig. 11 depicts an embodiment where software 1120 is delivered as a service. Software-as-a-service ('SaaS') is a model where software applications are delivered over the internet as-a-service. Rather than installing and maintaining software locally, users can access software via a web browser or other network connected interface, eliminating the need for complex software and hardware management on the client-side. In Fig. 11, as examples of software 1120 that can be delivered as-a-service, the illustrated embodiment includes office productivity 1122 software, customer relationship management ('CRM') 1124 software, and project management 1126 software. The office productivity 1122 software can include applications designed to facilitate common business and personal tasks, including word processing applications, applications for spreadsheet creation, presentation design applications, and many others. The CRM 1124 software can include applications for managing a business organization's relationships and interactions with customers and potential customers. The project management 1126 software can include applications designed to help teams plan, organize, and manage projects efficiently by facilitating collaboration and tracking the progress of projects. Readers will appreciate that in other embodiments, other types of software may be delivered using a SaaS model.

Fig. 11 depicts an embodiment where platforms 1112 can be delivered as a service. Platform-as-a-service ('PaaS') is a model that provides cloud customers with platform resources that they can use to develop, run, and manage applications without the complexity of such deploying and managing such infrastructure on their own. In Fig. 11, as examples of platform 1112 resources that can be delivered as-a-service, the illustrated embodiment includes database 1114 services, development tools 1116 services, and execution runtime 1118 services. The database 1114 services can be used to provide access to databases without management overhead for the user as the cloud service provider manages the provisioning, scaling, and maintenance of the databases. The development tools 1116 services can provide developers with tools to design, develop, test, and deploy applications without needing to manage the underlying infrastructure. The execution runtime 1118 services can provide environments where applications or other forms of computer program code can be executed, including services to scale the execution environment. Readers will appreciate that in other embodiments, other platform resources may be delivered using a PaaS model.

Fig. 11 depicts an embodiment where infrastructure 1104 can be delivered as a service. Infrastructure-as-a-Service ('IaaS') is a model that provides virtualized computing resources over the internet, such that infrastructure such as servers, storage, networks, and others may be leased on demand rather than purchasing and maintaining physical hardware. In Fig. 11, as examples of infrastructure 1104 resources that can be delivered as-a-service, the illustrated embodiment includes compute 1106 services, storage 1108 services, and networking 1110 services. The compute 1106 services can be used to provide on-demand access to computational resources such as VMs, containers, and serverless functions, where the cloud service provider manages the provisioning, scaling, and maintenance of such resources. The storage 1108 services can provide storage resources that can be used to store and access data, without the need for customers to purchase and manage on-premises physical storage resources. The networking 1110 services can provide the ability to create and manage virtualized networking resources such as, for example, virtual private networks ('VPNs'), firewalls, load balancers, and more. Readers will appreciate that in other embodiments, other infrastructure resources may be delivered using a PaaS model.

The cloud service provider of Fig. 11 also provides management 1130 resources. The management 1130 resources can include, for example, tools and interfaces that enable customers to efficiently deploy, monitor, and manage, their cloud services. Such tools can include web-based management consoles, command-line interfaces ('CLIs'), APIs, automation tools, and other tools.

The cloud service provider of Fig. 11 also provides security 1128 resources. The security 1128 resources can include, for example, tools and services to help customers protect their cloud environments and ensure compliance with security standards. These tools and services may provide specific aspects of security, including identity and access management, network security, threat detection, compliance management, and others.

Readers will appreciate that many of the components described above may be delivered as services from a cloud service provider. For example, the virtual machines, containers, and pods described above may all be delivered via a cloud service provider. In other embodiments, other forms of compute resources may be used in place of the virtual machines or other compute resource. For example, cloud compute instances may be utilized in place of the virtual machines.

Advantages and features of the present disclosure can be further described by the following statements:
1. A method of trust establishment for cloud computing environments, comprising: establishing an initial trust between an intermediary component of a computing environment and a host of the computing environment; intercepting, by the intermediary component, a request from software executing within the computing environment to an identity authentication endpoint; determining, by the intermediary, whether to authenticate the software; in response to determining to authenticate the software, applying, by the intermediary component, a digital signature to the request; and forwarding the request, with the digital signature, to the identity authentication endpoint.
2. The method of statement 1, wherein establishing the initial trust between the intermediary component of the computing environment and the host of the computing environment is performed during provisioning of the computing environment, and comprises: establishing a point-to-point connection between the intermediary component and the host; generating, by the host, a secret for authenticating requests to the identity authentication endpoint; and providing the secret from the host to the intermediary component during the initial provisioning.
3. The method of statement 1 or 2, further comprising: in response to the request, authenticating, by the identity authentication endpoint of the host, the software based on the digital signature and the initial trust; and returning an authentication token to the software.
4. The method of any combination of one or more of statements 1-3, wherein the initial trust comprises a virtual trusted platform module (vTPM) associated with the intermediary component.
5. The method of any combination of one or more of statements 1-4, wherein applying the digital signature to the request comprises signing the request with a private key of the vTPM, and wherein authenticating the software by the identity authentication endpoint comprises determining, based on a public key associated with the vTPM, that the request is signed by the private key of the vTPM.
6. The method of any combination of one or more of statements 1-5, wherein establishing the initial trust comprises mounting, by the intermediary component, a virtual disk to the computing environment, the virtual disk comprising a secret.
7. The method of any combination of one or more of statements 1-6, wherein establishing the initial trust comprises generating a hypervisor socket for secure communication between the intermediary component of the computing environment and the host.
8. An apparatus for trust establishment in cloud computing environments, comprising: a memory; and one or more processing devices, operatively coupled to the memory, the one or more processing devices configured to: establish an initial trust between an intermediary component of a computing environment and a host of the computing environment; intercept, by the intermediary component, a request from software executing within the computing environment to an identity authentication endpoint; determine, by the intermediary, whether to authenticate the software; in response to determining to authenticate the software, apply, by the intermediary component, a digital signature to the request; and forward the request, with the digital signature, to the identity authentication endpoint.
9. The apparatus of statement 8, wherein the one or more processing devices establish the initial trust between the intermediary component of the computing environment and the host of the computing environment during provisioning of the computing environment, and wherein to establish the initial trust, the one or more processing devices are configured to: establish a point-to-point connection between the intermediary component and the host; generate, by the host, a secret for authenticating requests to the identity authentication endpoint; and provide the secret from the host to the intermediary component during the initial provisioning.
10. The apparatus of statement 8 or 9, wherein the one or more processing devices are configured to: in response to the request, authenticate, by the identity authentication endpoint of the host, the software based on the digital signature and the initial trust; and return an authentication token to the software.
11. The apparatus of any combination of one or more of statements 8-10, wherein the initial trust comprises a virtual trusted platform module (vTPM) associated with the intermediary component.
12. The apparatus of any combination of one or more of statements 8-11, wherein to apply the digital signature to the request, the one or more processing devices are configured to sign the request with a private key of the vTPM, and wherein to authenticate the software by the identity authentication endpoint the one or more processing devices are configured to determine, based on a public key associated with the vTPM, that the request is signed by the private key of the vTPM.
13. The apparatus of any combination of one or more of statements 8-12, wherein to establish the initial trust, the one or more processing devices are configured to: mount, by the intermediary component, a virtual disk to the computing environment, the virtual disk comprising a secret.
14. The apparatus of any combination of one or more of statements 8-13, wherein to establish the initial trust the one or more processing devices are to generate a hypervisor socket for secure communication between the intermediary component of the computing environment and the host.
15. A non-transitory computer readable storage medium storing instructions thereon which, when executing by a processing device, cause the processing device to: establish an initial trust between an intermediary component of a computing environment and a host of the computing environment; intercept, by the intermediary component, a request from software executing within the computing environment to an identity authentication endpoint; determine, by the intermediary, whether to authenticate the software; in response to determining to authenticate the software, apply, by the intermediary component, a digital signature to the request; and forward the request, with the digital signature, to the identity authentication endpoint.
16. The non-transitory computer readable storage medium of statement 15, wherein the processing device establishes the initial trust between the intermediary component of the computing environment and the host of the computing environment during provisioning of the computing environment, and wherein to establish the initial trust, the processing device is to: establish a point-to-point connection between the intermediary component and the host; generate, by the host, a secret for authenticating requests to the identity authentication endpoint; and provide the secret from the host to the intermediary component during the initial provisioning.
17. The non-transitory computer readable storage medium of statement 15 or 16, wherein the processing device is to: in response to the request, authenticate, by the identity authentication endpoint of the host, the software based on the digital signature and the initial trust; and return an authentication token to the software.
18. The non-transitory computer readable storage medium of any combination of statements 15-17, wherein the initial trust comprises a virtual trusted platform module (vTPM) associated with the intermediary component.
19. The non-transitory computer readable storage medium of any combination of statements 15-18, wherein to apply the digital signature to the request, the processing device is to sign the request with a private key of the vTPM, and wherein to authenticate the software by the identity authentication endpoint the processing device is to determine, based on a public key associated with the vTPM, that the request is signed by the private key of the vTPM.
20. The non-transitory computer readable storage medium of any combination of statements 15-19, wherein to establish the initial trust, the processing device is to: mount, by the intermediary component, a virtual disk to the computing environment, the virtual disk comprising a secret.

Although some embodiments are described largely in the context of a system, method, or in some other way, readers will recognize that embodiments of the present disclosure may also take the form of a computer program product disposed upon computer readable storage media for use with any suitable processing system. Such computer readable storage media may be any storage medium for machine-readable information, including magnetic media, optical media, solid-state media, or other suitable media. Examples of such media include magnetic disks in hard drives or diskettes, compact disks for optical drives, magnetic tape, and others as will occur to those of skill in the art. Persons skilled in the art will immediately recognize that any computer system having suitable programming means will be capable of executing the steps described herein as embodied in a computer program product. Persons skilled in the art will recognize also that, although some of the embodiments described in this specification are oriented to software installed and executing on computer hardware, nevertheless, alternative embodiments implemented as firmware or as hardware are well within the scope of the present disclosure.

Readers will appreciate that some embodiments are described in which computer program instructions are executed on computer hardware such as, for example, one or more computer processors. Readers will appreciate that in other embodiments, computer program instructions may be executed on virtualized computer hardware (e.g., one or more virtual machines), in one or more containers, in one or more cloud computing instances, in one or more serverless compute instances offered such as those offered by a cloud services provider, in one or more event-driven compute services such as those offered by a cloud services provider, or in some other execution environment.

In some examples, a non-transitory computer-readable medium storing computer-readable instructions may be provided in accordance with the principles described herein. The instructions, when executed by a processor of a computing device, may direct the processor and/or computing device to perform one or more operations, including one or more of the operations described herein. Such instructions may be stored and/or transmitted using any of a variety of known computer-readable media.

A non-transitory computer-readable medium as referred to herein may include any non-transitory storage medium that participates in providing data (e.g., instructions) that may be read and/or executed by a computing device (e.g., by a processor of a computing device). For example, a non-transitory computer-readable medium may include, but is not limited to, any combination of non-volatile storage media and/or volatile storage media. Exemplary non-volatile storage media include, but are not limited to, read-only memory, flash memory, a solid-state drive, a magnetic storage device (e.g., a hard disk, a floppy disk, magnetic tape, etc.), ferroelectric random-access memory ("RAM"), and an optical disc (e.g., a compact disc, a digital video disc, a Blu-ray disc, etc.). Exemplary volatile storage media include, but are not limited to, RAM (e.g., dynamic RAM).

One or more embodiments may be described herein with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claims. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality.

To the extent used, the flow diagram block boundaries and sequence could have been defined otherwise and still perform the certain significant functionality. Such alternate definitions of both functional building blocks and flow diagram blocks and sequences are thus within the scope and spirit of the claims. One of average skill in the art will also recognize that the functional building blocks, and other illustrative blocks, modules and components herein, can be implemented as illustrated or by discrete components, application specific integrated circuits, processors executing appropriate software and the like or any combination thereof.

While particular combinations of various functions and features of the one or more embodiments are expressly described herein, other combinations of these features and functions are likewise possible. The present disclosure is not limited by the particular examples disclosed herein and expressly incorporates these other combinations.

## Claims

1. A method of trust establishment for cloud computing environments, comprising:
establishing an initial trust between an intermediary component of a computing environment and a host of the computing environment;
intercepting, by the intermediary component, a request from software executing within the computing environment to an identity authentication endpoint;
determining, by the intermediary component, whether to authenticate the software;
in response to determining to authenticate the software, applying, by the intermediary component, a digital signature to the request; and
forwarding the request, with the digital signature, to the identity authentication endpoint.

2. The method of claim 1, wherein establishing the initial trust between the intermediary component of the computing environment and the host of the computing environment is performed during provisioning of the computing environment, and comprises:
establishing a point-to-point connection between the intermediary component and the host;
generating, by the host, a secret for authenticating requests to the identity authentication endpoint; and
providing the secret from the host to the intermediary component during the initial provisioning.

3. The method of claim 1 or 2, further comprising:
in response to the request, authenticating, by the identity authentication endpoint of the host, the software based on the digital signature and the initial trust; and
returning an authentication token to the software.

4. The method of one of claims 1 to 3, wherein the initial trust comprises a virtual trusted platform module (vTPM) associated with the intermediary component.

5. The method of claim 4, wherein applying the digital signature to the request comprises signing the request with a private key of the vTPM, and wherein authenticating the software by the identity authentication endpoint comprises determining, based on a public key associated with the vTPM, that the request is signed by the private key of the vTPM.

6. The method of one of claims 1 to 5, at least one of:
wherein establishing the initial trust comprises mounting, by the intermediary component, a virtual disk to the computing environment, the virtual disk comprising a secret; and
wherein establishing the initial trust comprises generating a hypervisor socket for secure communication between the intermediary component of the computing environment and the host.

7. An apparatus for trust establishment in cloud computing environments, comprising:
a memory; and
one or more processing devices, operatively coupled to the memory, the one or more processing devices configured to:
establish an initial trust between an intermediary component of a computing environment and a host of the computing environment;
intercept, by the intermediary component, a request from software executing within the computing environment to an identity authentication endpoint;
determine, by the intermediary component, whether to authenticate the software;
in response to determining to authenticate the software, apply, by the intermediary component, a digital signature to the request; and
forward the request, with the digital signature, to the identity authentication endpoint.

8. The apparatus of claim 7, wherein the one or more processing devices establish the initial trust between the intermediary component of the computing environment and the host of the computing environment during provisioning of the computing environment, and wherein to establish the initial trust, the one or more processing devices are configured to:
establish a point-to-point connection between the intermediary component and the host;
generate, by the host, a secret for authenticating requests to the identity authentication endpoint; and
provide the secret from the host to the intermediary component during the initial provisioning.

9. The apparatus of claim 7 or 8, wherein the one or more processing devices are configured to:
in response to the request, authenticate, by the identity authentication endpoint of the host, the software based on the digital signature and the initial trust; and
return an authentication token to the software.

10. The apparatus of one of claims 7 to 9, wherein the initial trust comprises a virtual trusted platform module (vTPM) associated with the intermediary component.

11. The apparatus of claim 10, wherein to apply the digital signature to the request, the one or more processing devices are configured to sign the request with a private key of the vTPM, and wherein to authenticate the software by the identity authentication endpoint the one or more processing devices are configured to determine, based on a public key associated with the vTPM, that the request is signed by the private key of the vTPM.

12. The apparatus of one of claims 7 to 11, at least one of:
wherein to establish the initial trust, the one or more processing devices are configured to: mount, by the intermediary component, a virtual disk to the computing environment, the virtual disk comprising a secret; and
wherein to establish the initial trust the one or more processing devices are to generate a hypervisor socket for secure communication between the intermediary component of the computing environment and the host.

13. A non-transitory computer readable storage medium storing instructions thereon which, when executing by a processing device, cause the processing device to:
establish an initial trust between an intermediary component of a computing environment and a host of the computing environment;
intercept, by the intermediary component, a request from software executing within the computing environment to an identity authentication endpoint;
determine, by the intermediary component, whether to authenticate the software;
in response to determining to authenticate the software, apply, by the intermediary component, a digital signature to the request; and
forward the request, with the digital signature, to the identity authentication endpoint.

14. The non-transitory computer readable storage medium of claim 13, wherein the processing device establishes the initial trust between the intermediary component of the computing environment and the host of the computing environment during provisioning of the computing environment, and wherein to establish the initial trust, the processing device is to:
establish a point-to-point connection between the intermediary component and the host;
generate, by the host, a secret for authenticating requests to the identity authentication endpoint; and
provide the secret from the host to the intermediary component during the initial provisioning.

15. The non-transitory computer readable storage medium of claim 13 or 14, at least one of:
wherein the processing device is to:
in response to the request, authenticate, by the identity authentication endpoint of the host, the software based on the digital signature and the initial trust; and
return an authentication token to the software;
wherein the initial trust comprises a virtual trusted platform module (vTPM) associated with the intermediary component,
preferably wherein to apply the digital signature to the request, the processing device is to sign the request with a private key of the vTPM, and wherein to authenticate the software by the identity authentication endpoint the processing device is to determine, based on a public key associated with the vTPM, that the request is signed by the private key of the vTPM; and
wherein to establish the initial trust, the processing device is to: mount, by the intermediary component, a virtual disk to the computing environment, the virtual disk comprising a secret.
